# EUROPEAN PATENT APPLICATION

(11) **EP 0 705 892 A2**
(43) Date of publication of application: **10.04.1996**
(21) Application number: 95114727.1
(22) Date of filing: 19.09.1995
(51) Int. Cl.: C09D 17/00, C09D 7/02, B01F 17/00

(54) **Dispersion of solid particles in water**

(30) Priority: 21.09.1994 GB 9418985
(71) Applicant: ALBRIGHT & WILSON UK LIMITED, Oldbury, Warley, West Midlands B68 0NN (GB)
(72) Inventor: Davis, Keith Philip, Stourbridge, West Midlands DY7 6BP (GB); Smith, Alan Craig, Bedworth, Warwickshire CV12 8TB (GB); Williams, Michael John, Bridgnorth, Shropshire WV15 4DR (GB)
(74) Representative: Savidge, Roger Gordon Madgwick

(57) **Abstract**

A composition comprising a particulate solid which, in the absence of deflocculant, has a tendency to flocculate, and which is dispersed in a liquid aqueous medium, and at least one phosphono-carboxylic acid, or water soluble salt thereof, in an amount which is effective to inhibit flocculation of said particles, the phosphonocarboxylic acid having the general formula :

H[CHR CHR]ₙ - PO₃ M_{2/v}.

wherein at least one R group in each unit is a COOM_{1/v} group and the other R group(s) which may be the same or different is hydrogen, or a COOM_{1/v}, hydroxyl, phosphono, sulphono, C₁₋₇ alkyl, C₁₋₇ alkenyl group or a carboxylate, phosphono, sulphono, sulphato and/or a hydroxy substituted C₁₋₇ alkyl or C₁₋₇ alkenyl group, and each M is a cation such that the phosphonated carboxylate is water soluble v is the valency of M and n is from 1 to 6.

## Description

The present invention relates to dispersions or slurries of solid particles in water and in particular to dispersions of mineral particles which normally tend to flocculate, and to a method of inhibiting the flocculation of such particles and thereby improving the pourability of the dispersions.

A variety of mineral particles such as, bentonite, e.g. for use in detergent formulations, talc for use as a filler in the paper industry or as an ingredient of cosmetic or toiletry formulations, clay for use in the ceramic industries and titanium dioxide for use in paints and coatings, are required in the form of pumpable slurries or dispersions in water, which tend to be viscous or immobile at the relatively high concentrations which are generally desirable, both technically and economically.

In order to obtain readily handleable products with sufficiently high solid concentrations, it has therefore been necessary to use additives which reduce the viscosity. These have included surface active dispersants which reduce interfacial tension within the system, strong alkalis to inhibit electrostatic interaction between the particles, inhibitors which prevent crystal growth, and deflocculants.

Among the latter are various organic polyelectrolytes, e.g. polycarboxylates such as polymaleates, and condensed phosphates such as sodium hexametaphosphate and sodium tripolyphosphate. In general the polymeric deflocculants are too expensive to be considered for many applications, while condensed phosphates are not sufficiently stable in certain media, e.g. paint formulations, to be useful in such systems.

It has been noted that certain phosphonocarboxylates e.g. 2-phosphono 1, 2, 4 - tricarboxybutane (hereinafter referred to as PTCB) tend to inhibit the flocculation of particles such as calcium carbonate. PTCB is, however a relatively expensive product.

There is a need for a product which is of comparable or superior deflocculating power to existing high performance polymeric dispersants, but cheaper, and which is more stable on prolonged storage than the condensed phosphates.

We have now discovered that flocculation of mineral, or other solid, particles in water is very effectively inhibited by certain phosphonation products of unsaturated carboxylic acids.

Our invention therefore provides a composition comprising a particulate solid which, in the absence of deflocculant, has a tendency to flocculate, and which is dispersed in a liquid aqueous medium, and a phosphonocarboxylic acid, or a water soluble salt thereof, in an amount which is effective to inhibit flocculation of said particles, wherein said phosphonocarboxylic acid has the formula:

H[CHRCHR]ₙ-PO₃M_{2/v}

wherein at least one R group in each unit is a COOM_{1/V} group and the other R group is hydrogen or a COOM_{1/v}, hydroxyl, phosphono, sulphono, sulphato, C₁₋₇ alkyl, C₁₋₇ alkenyl group or a carboxylate, phosphono, sulphono, sulphato and/or hydroxy substituted C₁₋₇ alkyl or C₁₋₇ alkenyl group, and each M is a cation such that the phosphonated carboxylate is water soluble and n is from 1 to 6. Preferably n has value less than 5 e.g. 1 to 3.

The invention, according to a preferred embodiment uses a water soluble phosphono succinate or a phosphonated oligomer or mixture of phosphonated oligomers of maleic acid, of the formula H(CHCO₂M.CHCO₂M)ₙPO₃M₂ where n is greater than 1 and M is a cationic species such that the oligomer is substantially water soluble, and especially mixtures of such oligomers with phosphonosuccinic acid or its substantially water soluble salts. The phosphonosuccinic acid preferably constitutes at least a major proportion by weight based on the total weight of the solvent-free mixture.

It is particularly preferred, according to the invention, to use phosphonated oligomers which comprise: at least 10%, preferably at least 50% by weight of a phosphonosuccinate based on the weight of the solvent-free composition; a phosphonated dimer of maleate; optionally a minor proportion by weight, relative to the weight of dimer, of higher phosphonated oligomers of maleate; and from 0.5 to 5% by weight of phosphate. A phosphonated oligomaleate reaction product of the above type having a mean degree of polymerisation between 1 and 1.5 will be referred to herein as POM.

The deflocculant may be prepared by reacting a carboxylate salt with a phosphite salt in aqueous solution in the presence of a free radical initiator. Such processes are described in GB-A-2252322 and EP-A-0569731. In general the deflocculant may be any of the products described in aforesaid patents, and especially the reaction product formed by reacting an alkali metal maleate with an alkali metal phosphite in the presence of a peroxide such as sodium persulphate or hydrogen peroxide.

The aforesaid preferred POM reaction product for use according to the invention may, for example, be prepared according to the teaching of Example 1 of EP-A-0569731.

The amount of deflocculant used may be from 0.01 to 10% by weight of the dispersed solid. Higher concentrations could in some instances, be used but are unlikely to be cost effective.

Preferably the concentration based on the total weight of the solids is from 0.05 to 5%, more usually 0.1% to 3% most preferably 0.2% to 1%. With some deflocculants there is an optimum concentration above which the salt acts as a thickener. This optimum varies but typically lies between 0.3% and 0.8% by weight.

### The Dispersed Solid

The dispersed or suspended solid may be any particulate solid which is sufficiently chemically inert to be dispersed or suspended in the aqueous medium. The particles are preferably inorganic, and substantially water insoluble e.g. a mineral such as an aluminosilicate or metal ore. Examples include talc, calcite, barite, mica, clays, shales, haematite, bauxite, magnetite, galena, copper or iron pyrites, coal, zeolite, titanium oxide and zinc oxide. The invention also covers the suspension of soluble or sparingly soluble solids in saturated aqueous solutions thereof.

The solid may, for example, be a detergent builder or fabric conditioner; a clay for use in the manufacture of ceramic articles, or an abrasive, pigment, dye, pesticide, cosmetic or pharmaceutical, or a weighting agent for oil well drilling muds. The dispersed particles may alternatively comprise a polymer, resin or latex, e.g. for use in paints and printing inks.

The particle size of the solid is preferably sufficiently small to enable the particles to be readily dispersed or suspended. For example we prefer that the particles size is less than 1mm e.g. less than 0.5mm preferably 0.5 to 100 micron especially 1 to 50 microns.

The proportion of solid may be from 1 to 90% by weight based on the total weight of the composition. More usually the composition comprises from 10 to 80% preferably 20 to 70%, e.g. 30 to 65% by weight of suspended solid.

### The Liquid Medium

The liquid medium may be water, optionally containing a dispersant such as a dilute surfactant or lignin sulphonate and/or suspending agent such as carboxymethyl cellulose or polyvinyl pyrrolidone.

The composition may, for example, be in the form of a mechanical dispersion, slurry, paste, clay or mud, or a sedimented dispersion capable of redispersion by shaking or stirring.

The pH of the liquid medium is usually neutral or alkaline e.g. greater than 7, preferably 8 to 14, especially 9 to 12.

The liquid medium may optionally contain water miscible or emulsifiable organic solvents, but they are not normally needed and unless specifically required, e.g. where the suspension is intended for use as a paint composition, they are preferably absent.

### Pigment Suspensions

The invention is of particular value in providing mobile highly concentrated slurries of pigments, and especially of titanium oxide, for use as or in paints and other coating compositions.

According to a preferred embodiment there is provided a coating composition comprising: an aqueous based liquid vehicle; an organic binder comprising a drying oil or resin emulsified or interspersed with said liquid vehicle; particles of a pigment, which in the absence of a deflocculant, have a tendency to flocculate and which are suspended or dispersed in said liquid vehicle; and phosphono succinic acid, a phosphonated oligomer of an unsaturated carboxylic acid or a water soluble salt thereof in an amount sufficient to inhibit the flocculation of the pigment.

The preferred pigment is titanium oxide but any other pigment which has a tendency to flocculate may be used. For example, other useful pigments include, iron oxide, carbon black, phthalocyanine pigments or aluminium stearate. The pigment may comprise corrosion inhibiting pigments such as red lead, potassium zinc chromate, metallic zinc or aluminium powder or zinc oxide or zinc, calcium or aluminium phosphate, or citrates. The formulation may also contain polymers such as chlorinated rubber, polystyrene or silicone, asphalt, wetting agents, dispersants, emulsifiers, biocides, marine antifoulants, antifoams, viscosifiers, fire retardants, fluorescers, aerosol propellants, extenders such as talc or clay and/or plasticisers.

The pigments are generally dispersed in paint, varnish, enamel, lacquer, or other coating formulation. The formulation may comprise a volatile liquid vehicle, such as water or a volatile organic solvent including petroleum spirit, turpentine, ketones, esters and/or aromatic hydrocarbon solvent, and/or a drying oil, such as linseed oil, soya oil, tung oil or dehydrated castor oil which may optionally be dissolved in said organic solvent or emulsified in said water. The formulation typically may also comprise a resin, or curable resin precursor, e.g. a polyester, urea formaldehyde, melamine, acrylic, alkyd, polyurethane, vinyl chloride, vinyl acetate, phenolic or epoxy resin dissolved or dispersed therein.

The deflocculant may be added to the pigment, or to an aqueous slurry thereof, prior to formulating the paint in order to provide the paint formulator with the pigment in a more readily and safely handleable and transportable form than either the powdery solid or a flocculated slurry thereof.

The invention may also provide bentonite slurries of improved mobility suitable for use in or as fabric conditioners e.g. in laundry applications, or for use in drilling muds, e.g. in drilling bore holes for oil wells. The invention also provides clay slips, e.g. kaolin, for ceramic use.

The invention is illustrated by the following examples:

### Example 1

POM was compared with sodium hexametaphosphate (SHMP) and two commercial polycarboxylate deflocculants which are used to deflocculate titanium dioxide in the paint industry. 65% by weight titanium oxide was slurried in water with various concentrations of deflocculant. Viscosity was measured at 25°C and 21 sec⁻¹ shear rate using a "Carrimed" controlled stress rheometer with 4cm flat parallel plates and a 1 mm gap. The results are set out in Table 1, all percentages are by weight and viscosities are expressed in Pa s.

**Table 1**

| % Deflocc on Pigment | SHMP | POM | Polycarboxylate A | Polycarboxylate B |
|---|---|---|---|---|
| 0 | 13.4 | 13.4 | 13.4 | 13.4 |
| 0.1 | 8.9 | 10.0 | 12.0 | 8.9 |
| 0.15 | 6.3 | 3.2 | 7.1 | 6.4 |
| 0.2 | 3.5 | 0.7 | 5.0 | 5.0 |
| 0.25 | 2.3 | 0.3 | 0.9 | 1.6 |
| 0.4 | 0.1 | 0.1 | 0.4 | 0.2 |
| 1.0 | 0.1 | 0.2 | 0.08 | 0.1 |

The POM according to the invention gave lower viscosities than the polymers in concentrations between 0.15 and 0.5%. Being comparatively inexpensive it provides a substantial advance in terms of cost effectiveness. The SHMP, although relatively cheap, is not sufficiently stable to withstand the long periods of storage to which paints are often subjected. In contrast POM has been found to possess the requisite stability.

### Example 2

POM was compared with sodium amino trismethylene phosphonate (ATMP) and PTCB in a drilling mud comprising 15% by weight of bentonite in deionised water at increasing shear rate on a FANN viscometer. The results are recorded in Table 2. Percentages are expressed as weight of active acid based on the total weight of the mud.

The viscosities in Pa s are shown in Table 2.

**Table 2**

| % Defloc | Shear Rate | Blank | POM | PTCB | ATMP |
|---|---|---|---|---|---|
| 1.36 | 100 rpm | 351.64 | 23.8 | 17.9 | 17.9 |
| 1.36 | 200 rpm | 186.25 | 20.9 | 14.9 | 16.4 |
| 1.36 | 300 rpm | 131.1 | 16.9 | 13.9 | 14.9 |
| 1.36 | 600 rpm | 66.6 | 12.9 | 13.4 | 13.4 |
| 0.68 | 100 rpm | 351.64 | 35.8 | 26.8 | 26.8 |
| 0.68 | 200 rpm | 186.25 | 29.8 | 23.8 | 22.4 |
| 0.68 | 300 rpm | 131.1 | 25.8 | 20.9 | 20.9 |
| 0.68 | 600 rpm | 66.6 | 18.4 | 18.4 | 17.4 |
| 0.34 | 100 rpm | 351.64 | 50.7 | 50.7 | 44.7 |
| 0.34 | 200 rpm | 186.25 | 31.3 | 40.2 | 37.3 |
| 0.34 | 300 rpm | 131.1 | 27.8 | 35.8 | 32.8 |
| 0.34 | 600 rpm | 66.6 | 24.4 | 27.3 | 25.3 |
| 0.068 | 100 rpm | 351.64 | 116.22 | 92.4 | 83.4 |
| 0.068 | 200 rpm | 186.25 | 65.66 | 56.6 | 50.7 |
| 0.068 | 300 rpm | 131.1 | 47.7 | 45.7 | 41.7 |
| 0.068 | 600 rpm | 66.6 | 28.8 | 37.7 | 33.3 |

### Example 3

The following formulation is a typical clay slip used for the manufacture of sanitaryware e.g. ceramic wash basins and toilets.

| Component | % |
|---|---|
| Ball clay | 18.3 |
| China clay | 20.8 |
| Quartz | 20.8 |
| Nepheline syenlite | 13.1 |
| Water + | 13.1 |
| Deflocculant | 27.22 |

The following samples were prepared:
1. Blank - no deflocculant
2. A mixture of Sodium Silicate/Sodium Carbonate at a ratio of 2:1 as a deflocculant.
3. POM as a deflocculant.

Viscosity measurements using a CARRIMED controlled stress rheometer gave the following viscosities (Pa. S) at a shear rate of 21 sec-¹ at 25°C. A 4cm parallel plate was used.

### 0.3% deflocculant solids to total solids

| Sample | Deflocculant | Viscosity (Pa.S) |
|---|---|---|
| 1 | None | Infinite, even at shear stress 500 Nm- |
| 2 | SiO₃/CO₃ | 0.0640 |
| 3 | POM | 0.0380 |

### 0.2% deflocculant solids to total solids

| Sample | Deflocculant | Viscosity |
|---|---|---|
| 1 | None | Infinite, even at shear stress 500 Nm- |
| 2 | SiO₃/CO₃ | 0.0825 |
| 3 | POM | 0.0486 |

### 0.1% deflocculant solids to total solids

| Sample | Deflocculant | Viscosity (Pa.S) |
|---|---|---|
| 1 | None | Infinite, even at shear stress 500 Nm- |
| 2 | SiO₃/CO₃ | 0.8900 |
| 3 | POM | 0.0612 |

### 0.05% deflocculant solids to total solids

| Sample | Deflocculant | Viscosity (Pa.S) |
|---|---|---|
| 1 | None | Infinite, even at shear stress 500 Nm- |
| | | |
| 2 | SiO₃/CO₃ | 9.0781 |
| 3 | POM | 0.6602 |

### Example 4

The degree of flocculation of Ti0₂ using the sodium salts of phosphonosuccinic acid and oligomers of unsaturated carboxylic acids containing 1.3 and 5.5 units was determined.

| **Sample** | **Calculated molecular weight of sample** | **No of maleate units in sample** |
|---|---|---|
| X | 286 | 1 |
| Y | 334 | 1.3 |
| Z | 1006.2 | 5.5 |

65% by weight titanium dioxide was slurried in water with various concentrations of deflocculant. The deflocculants were added at levels of 0.1, 0.15 and 0.2% deflocculant solids (sodium salts) to titanium dioxide. All the deflocculants were used in their fully neutralised (sodium) form. Visocisty measurements were conducted using a CARRIMED controlled stress rheometer, the viscosities (Pa.s). being measured at a shear rate of 21 sec⁻¹ at 25°C. A 3 cm parallel plate was used.

| **Deflocculant** | **Deflocculant level/ % w/w deflocculant to Ti02** | | | |
|---|---|---|---|---|
| | 0 | 0.1 | 0.15 | 0.2 |
| X | 10.88 | 0.153 | 0.047 | 0.039 |
| Y | 10.88 | 0.336 | 0.043 | 0.039 |
| Z | 10.88 | 1.179 | 0.127 | 0.056 |

The results indicate that the deflocculant having shortest chain length, X, (i.e. lowest molecular weight) is the most active.

## Claims

1. A composition comprising a particulate solid which, in the absence of deflocculant, has a tendency to flocculate, and which is dispersed in a liquid aqueous medium, and at least one phosphonocarboxylic acid, or water soluble salt thereof, in an amount which is effective to inhibit flocculation of said particles, characterised in that said phosphonocarboxylic acid has the general formula
H[CHR CHR]ₙ - PO₃ M_{2/V}.
wherein at least one R group in each unit is a COOM_{1/V} group and the other R group(s) which may be the same or different is hydrogen, or a COOM_{1/v}, hydroxyl, phosphono, sulphono, C₁₋₇ alkyl, C₁₋₇ alkenyl group or a carboxylate, phosphono, sulphono, sulphato and/or a hydroxy substituted C₁₋₇ alkyl or C₁₋₇ alkenyl group, and each M is a cation such that the phosphonated carboxylic acid is water soluble, v is the valency of M and n is from 1 to 6.

2. A composition according to Claim 1 where n has an average value of from 1 to 3.

3. A composition according to Claim 2 wherein said phosphonocarboxylic acid is phosphonosuccinic acid.

4. A composition according to either of Claims 1 and 2 wherein said phosphonocarboxylic acid is a phosphonated oligomer of an unsaturated carboxylic acid.

5. A composition according to Claim 4 wherein said phosphonated oligomer is a phosphonated oligomer of maleic acid of the formula H(CHCO₂M CHCO₂M)ₙPO₃M₂ where n is greater than 1 and M is a cationic species such that the compound is substantially water soluble.

6. A composition according to any foregoing claim wherein said composition comprises from 0.01 to 10% by weight based on the weight of the dispersed solid of said phosphonocarboxylic acid.

7. A composition according to any of Claims 1 to 4 wherein said composition comprises from 1 to 90% of said solid by weight based on the total weight ofthe composition.

8. A composition according to any of the foregoing claims wherein said solid is selected from the group comprising inorganic minerals, detergent builder, fabric conditioner, clay, abrasive, pigment, dye, pesticide, pharmaceutical, cosmetic, weighting agent, polymer, resin, latex.

9. A composition according to any of the foregoing claims, wherein said liquid medium comprises a dispersant selected from the group comprising a surfactant, a lignin sulphonate and a suspending agent or a mixture thereof.

10. A composition according to any of the foregoing claims wherein the pH of the liquid medium is neutral or alkaline.

11. A composition according to any of the foregoing claims wherein said salt is the sodium or potassium salt.

12. A coating composition according to any foregoing claim comprising: an aqueous based liquid vehicle; an organic binder comprising a drying oil or resin emulsified or interspersed with said liquid vehicle; particles of a pigment, which, in the absence of a deflocculant, have a tendency to flocculate and which are suspended or dispersed in said liquid vehicle; and at least one phosphonocarboxylic acid or a water soluble salt thereof in an amount sufficient to inhibit the flocculation of the pigment.
